# EUROPEAN PATENT APPLICATION

(11) **EP 2 458 858 A1**
(43) Date of publication of application: **30.05.2012**
(21) Application number: 10425361.2
(22) Date of filing: 24.11.2010
(51) Int. Cl.: H04N 7/24, H04N 5/00, H04N 7/16

(54) **"Multiple access system for conditional access to an encrypted service and related electronic access device"**

(71) Applicant: Santer Reply S.p.A., Milano (IT)
(72) Inventor: Cacioli, Alessandro, 20141 Milano (IT); Calcabrini, Fulvio, 10147 Torino (IT); Di Luzio, Luca, 10147 Torino (IT); Maddaleno, Marco, 10147 Torino (IT); Moioli, Mauro, 20158 Milano (IT); Monelli, Paolo, 10147 Torino (IT); Scanniffio, Paolo, 20158 Milano (IT)
(74) Representative: Nannucci, Lorenzo

(57) **Abstract**

In a multiple access system (1), for providing conditional access to a service, a number of slave electronic access devices (3; 3') are interfaced with respective terminal apparatuses (4), each slave electronic access device (3; 3') including a secure processing stage (6) for processing, when enabled, secure data to allow access to the service at the respective terminal apparatus (4). An access control subsystem (10; 10') is operatively coupled to the slave electronic access devices (3; 3'), and each slave electronic access device (3; 3') has an enabling stage (8) that receives from the access control subsystem (10; 10') control information (CS), and selectively enables operation of the secure processing stage (6) based on the received control information (CS).

## Description

The present invention relates to a multiple access system for providing conditional access to an encrypted service, and to a related electronic access device.

In particular, the following disclosure will make specific reference, without this implying any loss in generality, to television systems based on Conditional Access Modules (CAMs), that are operatively coupled to cryptographic Smart Cards and usually integrated within Set Top Boxes (STBs) or Digital TV apparatuses. These systems are widely used nowadays, for example for providing Pay-TV, Pay-Per-View (PPV) or Free-To-View (FTV) services, through satellite, digital cable, digital terrestrial, or over-the-internet communication.

More generally, the present disclosure relates to electronic devices dedicated to the reception of encrypted content, and in particular to control and management of conditional access by multiple communication devices to the received encrypted content (the expression "encrypted content" being intended to encompass any kind of signals, data and, in general, information, provided through a variety of wired or wireless communication networks and links, which have been encrypted, encoded with any kind of known technique so as to require decrypting, decoding operations in order to have access thereto).

As is known, a smart card (also known as "chip card", or "integrated circuit card - ICC") is an electronic access device, used to provide conditional access (i.e. to allow access when required conditions are satisfied) to a given apparatus, service, environment or similar, or to functions or operations provided by the same apparatus, service, environment. Smart cards generally comprise a processor unit (integrated in a chip) and external electrical contacts for coupling to a smart card reader or other electronic interface device, allowing the smart card to share information with the reader/interface device. Smart cards may have any suitable shape and size and construction; in common applications, smart cards may resemble a credit card in size and shape, having a plastic (or other suitable material) body embedding the processor unit chip and carrying the related electrical contacts.

In cooperation with a CAM module housed within a television set top box or digital television apparatus, a smart card may be used for allowing access to a received encrypted content; for example, content may include image and sound signals related to one or more movies or television programs.

The processor unit embedded in the smart card is provided with secure data, such as control information and suitable cryptographic keys and codes, in order to allow decoding of the received encrypted content, and provide a digital decompressed and decrypted data stream that may be processed and reproduced by the related set top box or television digital apparatus.

Usually, a CAM module coupled to the smart card is configured to implement decryption/descrambling operations and contains all the computing resources needed to decrypt and restore the received digital data stream encrypted/scrambled by the television provider for security and/or commercial reasons. The processor unit in the smart card contains all the required information, and proprietary firmware (so called "crypto engine") necessary for the decryption of the incoming signals, and in particular security and cryptographic keys and personal identification data, conveniently stored in a memory residing in the same processor unit.

Suitably programmed and configured smart cards are thus provided to subscribers by television providers (e.g. TV broadcasters), so as to allow viewing of pay-tv, pay-per-view, free-to-view, or similar broadcast television programs. Usually, a pay-per-view subscription is associated to a single smart card, which is personal to the subscriber, and is provided to the same subscriber at the act of subscribing to the service.

In order to access the encrypted television content, the user usually has to insert his/hers personal smart card into a STB or digital TV set (or other suitable receiving electronic terminal having a proper interface for the smart card and able to receive the encrypted content).

If the user desires to access the encrypted television content (in particular, a same or different television program or service) with an additional STB or TV set, e.g. that is located in a different position or room within the house or environment wherein the user is located, he/she has either to move the smart card or to apply for an additional subscription in order to receive an additional smart card, thus incurring in the related costs.

Both these approaches are aimed to achieve a so called "Multiroom Vision" of encrypted television programs on different STBs or TV sets, or in general to achieve a multiple access environment wherein access to received encrypted content may be allowed at different receiving electronic terminals. Both these approaches may be an issue for the service provider policy, and in any case may result in additional expenses and/or complicated operations for the user.

A proposed solution to the problem of effectively achieving a multiple access environment may envisage associating multiple smart cards to a same subscription; the smart cards may be provided by the broadcaster and service provider, possibly at a lower retail price. Each smart card may be able, when inserted in a respective terminal apparatus, to allow access to the encrypted contents.

This solution, however, may not be desirable, since it would cause a proliferation of smart cards, that in the end could also be redistributed (borrowed, etc.) and also resold on the black market, each smart card being programmed to allow decoding of the encrypted contents.

It would therefore be desirable to create a system for providing a user with a multiple access environment (e.g. with the possibility to access an encrypted content via a plurality of electronic terminal apparatuses, such as STB or digital TV sets), that prevents the above mentioned issues to occur.

In addition to that, it is known that cryptographic system providers (e.g. providing smart card crypto engines and chips, etc.) generally do not allow for any modification and/or access to their proprietary engines, and in particular generally forbid any interaction and communication of data between the chip containing the proprietary crypto engine and any other external device, different from the one providing the decryption/descrambling resources (e.g. the CAM module).

It would therefore be desirable to create a system able to provide the user with a multiple access environment, that may not require additional access to, and modification or transmittal of, any crypto-chip proprietary information.

It would also be desirable to achieve the above mentioned multiple access environment with a high degree of reuse of, and small modifications to, the existing hardware/software systems already present on the market and in the user houses, therefore avoiding a strong redesign of the existing hardware/software, e.g. of STBs, CAM modules and/or TV sets and home cabling/networking layouts.

The aim of the present invention is to solve the problems highlighted previously and moreover to satisfy the above needs.

According to the present invention, a multiple access system, and a related electronic access device are consequently provided, as defined in the appended claims.

For a better understanding of the present invention, preferred embodiments thereof are now described, purely by way of nonlimiting examples and with reference to the attached drawings, wherein:
- Figure 1 is a schematic general depiction of a multiple access system, according to the present invention;
- Figures 2 and 3 show schematic block diagrams of respective embodiments of an electronic access device for the multiple access system of Figure 1;
- Figures 4a-4c show possible embodiments of a sectioning element in the electronic access device of Figure 3;
- Figure 5 shows a multiple access system according to a first embodiment of the present invention;
- Figure 6 shows a multiple access system according to a second embodiment of the present invention; and
- Figure 7 shows a schematic block diagram of a further embodiment of an electronic access device for the multiple access system.

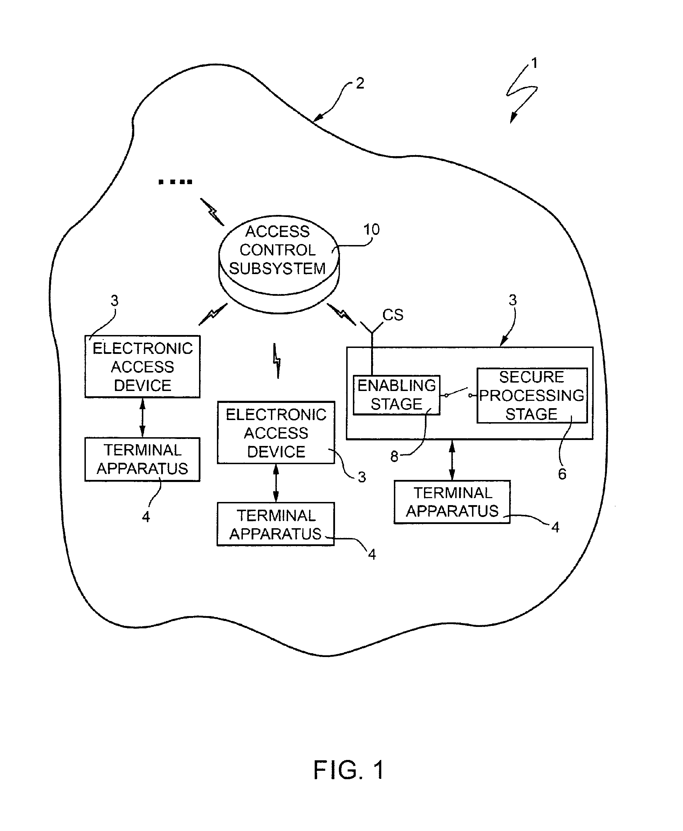

Figure 1 schematically shows a multiple access system 1, configured to provide conditional access with respect to an encrypted service in a multiple access environment 2.

In particular, it is underlined that the multiple access environment 2 may be equally geographically confined, when it is defined within a localized physical area, such as a room, an apartment, a building, a set of buildings; or logically confined, when it is defined in a logically delimited manner (i.e. to satisfy given confinement logic criteria), such as, for example, to include all the devices owned by a same user, or by the member of a same family or group of users (independently from the physical location of the same devices).

Multiple access system 1 includes a number of slave electronic access devices 3, for example of the smart card type, each adapted to be operatively coupled to one of a number of terminal apparatuses 4 (such as TV or STB sets), associated, directly or indirectly, with a user/subscriber to a given service. It is underlined that there may not be a rigid association between terminal apparatuses 4 and slave electronic access devices 3, provided that a slave electronic access device 3 is required to access the encrypted content through a given terminal apparatus 4.

Terminal apparatuses 4 are configured to receive an encrypted content (e.g. a television encrypted digital data stream), by means of any available communication technology, such as satellite, digital terrestrial or cable communication, and to decode and decrypt the received content through the slave electronic access device 3 operatively coupled thereto. In particular, the slave electronic access device 3 is suitable interfaced with electronic circuitry of the terminal apparatus 4, in order to allow a data exchange; the terminal apparatus 4 thus includes a reader or similar electronic interface (e.g. a CAM module in case of smart cards for television applications), configured to interface with the slave electronic access device 3.

Each slave electronic access device 3 includes a secure processing stage 6 (as schematically shown in Figure 1 for one exemplary slave electronic access device 3), that stores security information, such as cryptographic keys, needed to decode the received encrypted content (in a per se known manner, which is not detailed herein). The secure processing stage 6 may be made in a first chip of semiconductor material, usually called "crypto chip" or "secure chip", and includes a first processor unit implementing a so called "crypto engine", performing all the functions needed to allow decoding of the encrypted content received by the corresponding terminal apparatus 4 (e.g. encrypted TV channels provided by a digital broadcaster), thus constituting a so called "secure core" unit. By way of example, the crypto engine may be one of the existing commercial Pay-per-view crypto engines.

According to an aspect of the invention, each slave electronic access device 3 further comprises an enabling stage 8, which is operatively coupled to the secure processing stage 6 and is configured to enable/disable the operation of the same secure processing stage 6 and consequently to enable/disable decoding of the encrypted content at the associated terminal apparatus 4. Operation of the enabling stage 8 is schematically shown in Figure 1 as a on/off switch interposed between the same enabling stage 8 and the secure processing stage 6.

In particular, the enabling stage 8 is configured to receive control information CS (e.g. through a suitable digital signal), as a function of which the same enabling stage 8 enables the operation of the secure processing stage 6. The enabling stage 8 is thus provided with suitable communication means, implementing a wired or wireless communication link, and in particular: a commercial or proprietary protocol over a physical layer; a mix of one or more commercial or proprietary protocols over a physical layer; a commercial or proprietary protocol over a mix of physical layers; a mix of one or more commercial or proprietary protocols over a mix of physical layers. Conveniently, the communication protocol implemented for transmitting the control information CS (including suitable enabling/disabling key codes) is a secure communication protocol for signal transmission and reception.

The secure processing stage 6 of slave electronic access devices 3 is usually in a disabled condition (and remains in the disabled condition until enabled by the enabling stage 8). As an alternative solution, the secure processing stage 6, although being normally enabled, will be disabled if the control information CS (and the related key code or similar secure information) are not received within a preset timeout period (i.e. a given time interval starting, for example, from a power-on condition).

The enabling stage 8 includes a microcontroller (or a microprocessor, a programmable logic unit, like a FPGA, or other computing unit), and may be integrated in a second chip of semiconductor material. The first and second chips (integrating the secure processing stage 6 and, respectively, the enabling stage 8) may conveniently be housed in the same housing structure of the slave electronic access device 3, for example a plastic structure having a credit card size, with suitable electrical connection between each other and to the external environment. As an alternative solution, the processing stage 6 and the enabling stage 8 may be integrated in a single first chip (or chipset, or FPGA, or other computing unit), in particular having suitable wireless communication capability and related electronic front-end.

It should be clear that other arrangements may be equally envisaged during the assembling process, for example using two or more different chips for the secure processing stage 6 and related crypto engine, and two or more different chips for the enabling stage 8 (for example one including the communication means). It should altogether be clear that a different solution may envisage integrating on a same integrated circuit (i.e. a same chip) two or more distinct circuit layouts related to different units (e.g. one for the crypto engine and one for the enabling stage and related communication system). In any case, the secure processing stage 6 and the enabling stage 8 may conveniently be made in distinct and different bodies of semiconductor material.

Advantageously, in case of television systems, both the secure processing stage 6 (implementing the crypto engine) and the enabling stage 8 (enabling the operation of the same crypto engine) can be embodied into a standard smart card of any suitable form factor that can fit within an existing STB and/or TV set containing a standard CAM module. This would indeed allow maximizing the existing STBs, CAM and TV sets hardware/software reuse.

Multiple access system 1 further includes an access control subsystem 10, having suitable processing and communicating capabilities, and configured to perform pairing (by means of any known suitable technique, in particular for secure pairing) with the various slave electronic access devices 3 within the multiple access environment 2, and to supply the paired slave electronic access devices 3 with the control information CS, in order to control the respective enabling stages 8 and thus enable/disable the respective secure crypto engines. The control information CS may include, for example, any suitable key code, which may be provided in a secure way to the slave electronic access devices 3 via any suitable wired or wireless secure communication link.

In particular, the access control subsystem 10 is configured to communicate with the slave electronic access devices 3 within the multiple access environment 2, so as to establish a geographically/logically confined network according to a Master/Slave relationship, over which the control information CS are exchanged (the access control subsystem 10 acting as the Master device and the various slave electronic access devices 3 acting as the Slave devices, controlled by the Master device) .

For example, the multiple access environment 2 may be geographically confined within the walls of an apartment; in this case, the communication link may envisage a proximity wireless communication (e.g. with a Bluetooth, ZigBee, Wifi, Cyfi, or any suitable proprietary protocol) to create a local area network (such as a WLAN). Alternatively, in case the multiple access environment 2 is logically confined, the communication link may envisage a broad range communication, e.g. including an ad-hoc wireless wide area network (WAN) or the Internet network (in the latter case, respective IP addresses, known to the access control subsystem 10, may be assigned to the slave electronic access devices 3 in the multiple access environment 2, so as to allow their secure identification and pairing with the same access control subsystem 10). For example, the access control subsystem 10 and zero or more slave electronic access devices 3 may be located at a family main house, while one or more further slave electronic access devices 3 may be located at a family vacation house; in this case, the slave electronic access devices 3 located in the family vacation house are "logically connected" to the access control subsystem 10 located in the main family house.

The slave electronic access devices 3 are allowed to operate, thereby allowing decoding of the encrypted content received by the associated terminal apparatuses 4, only when they belong to the geographically/logically confined network established by the access control subsystem 10. Therefore, if a slave electronic access device 3 is moved away from the multiple access environment 2, thus exiting the geographically/logically confined network, it will not be able to receive the control information CS (and the related key code or similar secure information) from the access control subsystem 10 and its crypto engine will be disabled.

This solution thus allows preventing the proliferation of fully operating smart cards that can be distributed (borrowed, etc.) and resold on the black market. Moreover, since the enabling stage 8 acts only in terms of enabling/disabling (or switching it on/off) the cryptographic engine, without interacting with the same cryptographic engine, the issue is avoided of accessing, modifying or transmitting the proprietary know-how contained in the same crypto engine; in other words, the cryptographic engine can be supplied from a third party without the need of revealing the operating principles, the cryptographic keys or cryptographic methods implemented by the same cryptographic engine.

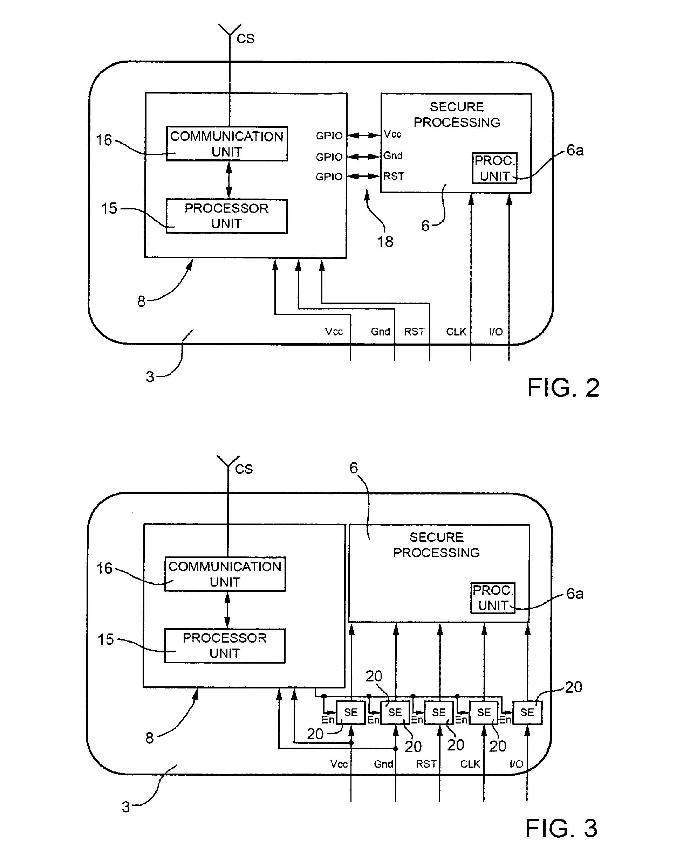

Figure 2 shows a possible embodiment of a slave electronic access device 3 of the multiple access system 1 discussed above.

As previously discussed, the slave electronic access device 3, which is shown, by way of example, as having the shape of a smart card (such as known pay-per-view smart cards), includes the secure processing stage 6, and the enabling stage 8, configured to enable or disable the same cryptographic engine.

The slave electronic access device 3 includes a casing, e.g. of plastic material, in which the secure processing stage 6 and the enabling stage 8 are embedded (with suitable electrical contacts being provided to the external environment, in order to exchange electrical signals with external electronic devices).

In detail, the secure processing stage 6 includes the first processor unit, indicated with 6a, configured to implement the cryptographic engine for allowing decoding of encrypted content. The enabling stage 8 includes a second processor unit 15 (e.g. provided with a microcontroller, a microprocessor, a programmable logic or any other computing unit), and a communication unit 16, operatively and electrically coupled to the second processor unit 15.

The communication unit 16 is configured to establish a wired/wireless communication link with the access control subsystem 10 of the multiple access system 1, in order to exchange pairing information and signals, so as to enter the geographically/logically confined network established by the same access control subsystem 10. The communication unit 16 is thus provided with suitable antenna means (in case a wireless communication is implemented), or wired connection elements (in case a wired communication is instead implemented), or both of the above elements (in case both of a wireless and a wired communications are implemented). In any case, the communication unit 16 receives the control information CS, e.g. including a suitable secure key, and transmits this information to the second processor unit 15.

According to the embodiment shown in Figure 2, the second processor unit 15 has a first and second inputs receiving power supply signals, in particular a supply voltage Vcc and, respectively, a ground reference Gnd; the second processor unit 15 may also receive at input a reset logic signal RST. Power supply signals may be supplied to the second processor unit 15 from external devices, such as an electronic reader (e.g. a CAM module) with which the slave electronic access device 3 is interfaced.

The second processor unit 15 receives from the communication unit 16 the control information CS and, as a function of the same control information CS (e.g. based on the value of a received logic control signal), proceeds to enabling or disabling the first processor unit 6a in the secure processing stage 6. In particular, the second processor unit 15 selectively supplies, through an electrical connection path 18, the first processor unit 6a with the power supply signals, in particular the supply voltage Vcc and the ground reference Gnd, based on the control information CS; only when properly supplied, the first processor unit 6a is enabled to allow decoding of the encrypted content. For example, the power supply signals may be supplied through General Purpose Input/Output (GPIO) signal pins of the second processor unit 15.

In the embodiment shown in Figure 2, the enabling stage 8 also provides the reset signal RST to the first processor unit 6a. Moreover, the first processor unit 6a is provided with: a first input port receiving a clock signal from the external environment; and a second input/output port exchanging signals and data with the external environment, when enabled (e.g. in order to communicate with a related reading interface allowing decoding of the received encrypted data stream).

Therefore, according to the embodiment shown in Figure 2, the first processor unit 6a is only allowed to operate when power supply signals are provided, through the electrical connection path 18, from the enabling stage 8.

Figure 3 shows a different embodiment of the slave electronic access device 3, which differs due to a different enabling arrangement for enabling the operation of the first processor unit 6a by the enabling stage 8.

This embodiment does not envisage an electrical connection between the enabling stage 8 and the first processor unit 6a, but instead the presence of a plurality of sectioning elements 20, controlled by the enabling stage 8, which are configured to enable/disable input of the required power supply signals to the same first processor unit 6a (thus enabling/disabling its operation); sectioning elements 20 may be controlled switching elements.

In detail, the first processor unit 6a has a plurality of inputs, which are selectively enabled, by respective sectioning elements 20, to receive from the external environment a respective one of: the supply voltage Vcc; the ground reference Gnd; the clock signal CLK; and the reset signal RST. A further sectioning element 20 may also be provided in association with an input/output port of the same first processor unit 6a, designed for exchanging signals and data with the external environment.

Each sectioning element 20 is provided with: a signal input receiving the respective signal from the external environment (thus being electrically connected to respective external electrical contact elements carried by the casing of the slave electronic access device 3); a signal output electrically connected to a respective input of the first processor unit 6a; and a control input, adapted to receive an enabling signal EN.

The enabling signal EN is supplied by the enabling stage 8, based on the received control information CS. In particular, the enabling stage 8 has an output connected to the control input of all the sectioning elements 20, and supplying thereto the enabling signal EN.

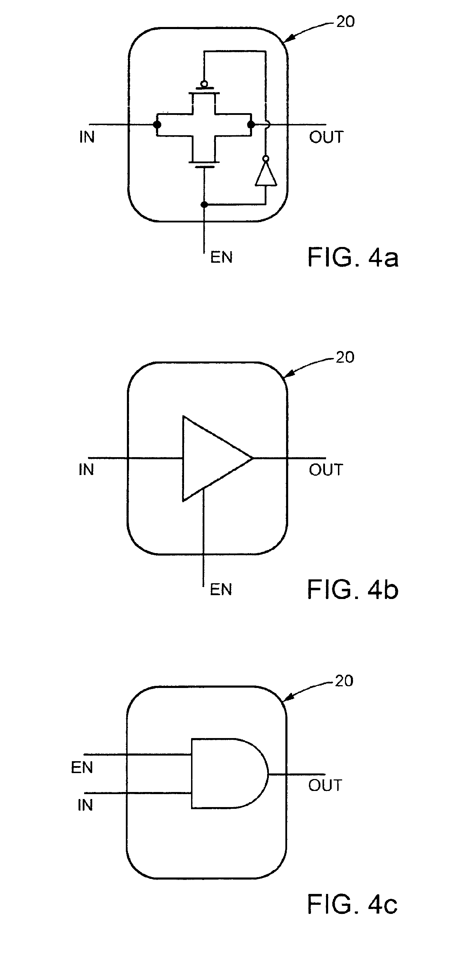

The sectioning elements 20 are configured, based on the value of the enabling signal EN, to electrically connect the respective signal input and signal output, thus defining a continuous electrical path to the first processor unit 6a. To this end, the sectioning element 20 may have any suitable known circuit configuration to interrupt or force to a certain state the signals provided to the first processor unit 6a. Figures 4a-4c show, by way of non limiting examples, three possible circuit configurations of the sectioning element 20 (which are known and thus are not described in detail), envisaging the use respectively of: a CMOS gate (Figure 4a); a buffer (Figure 4b); and an AND logic gate (Figure 4c). Clearly, any other suitable kind of solid state switching elements, tri-state buffers, logic gate or miniaturized micro electromechanical devices (e.g. MEMs) can equally be envisaged for the same sectioning element 20.

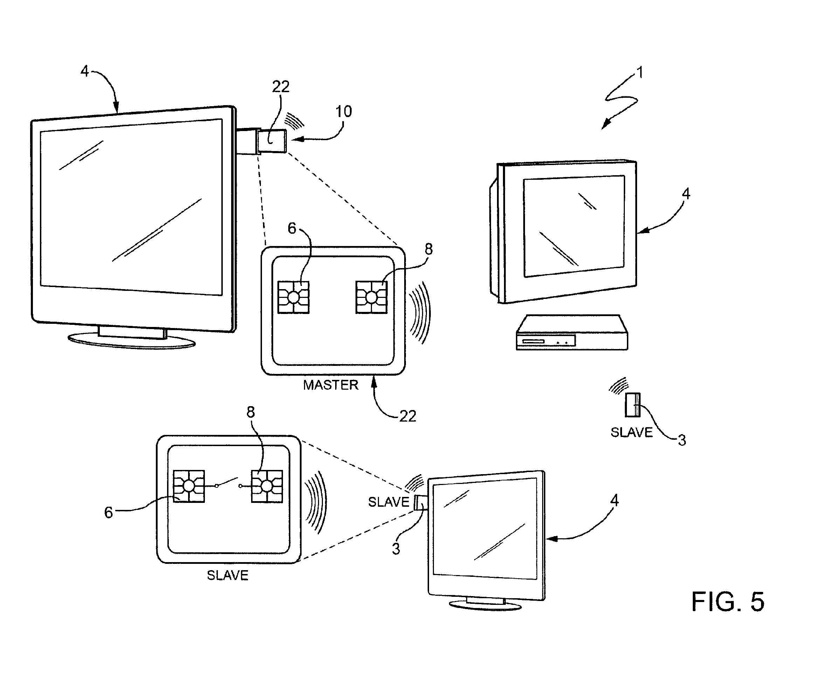

A first embodiment for the multiple access system 1 is now disclosed, with reference to Figure 5, which relates, only by way of example, to a television system.

According to this first embodiment, the access control subsystem 10 of the multiple access system 1 includes a master electronic access device 22, having an internal architecture which is similar to that of the slave electronic access devices 3 discussed above with reference to Figures 2-3, but operating as Master. The master electronic access device 22 is interfaced to a respective terminal apparatus 4 (for example a digital TV apparatus), and is provided with a secure processing stage 6, that allows decoding of encrypted content, and an enabling stage 8 (by way of example, the secure processing stage 6 and enabling stage 8 are schematically shown as distinct chips in Figure 5).

A number of slave electronic access devices 3, acting as Slaves to the master electronic access device 22, are interfaced with further terminal apparatuses 4 (for example one with a further digital TV set, and another one with a set-top-box set). All the master and slave electronic access devices, in a possible realization, are active smart cards, e.g. suitably modified pay-per-view smart cards with the addition of the enabling stage 8, that may be operatively coupled to the existing crypto engine (implemented by the first processor unit 6a), so as to minimize modifications to existing hardware and software.

The master electronic access device 22 is programmed and configured (e.g. directly at the manufacturing stage), in such a manner that the respective secure processing stage 6 is enabled by default. In particular, in the case of the master electronic access device 22, no connection (and no signal communication) may even be envisaged between the enabling stage 8 and the secure processing stage 6, which may be always enabled, e.g. due to the fact that power supply signals are supplied thereto without interruptions; alternatively, the secure processing stage 6 may be connected to the enabling stage 8, which supplies thereto, again without interruptions, the same power supply signals.

The enabling stage 8 of the master electronic access device 22 is configured to create a network including the slave electronic access devices 3 and to communicate thereto the control information CS (and the associated secure codes). The master electronic access device 22 is thus configured and programmed in order to pair with the slave electronic access devices 3 and to establish the geographically/logically confined network within the multiple access environment 2.

Advantageously, the enabling stage 8 of the electronic access devices may be configured to have the embedded capability to be programmed as a Master or Slave device directly at the manufacturing stage, for example by means of suitable fuse arrangements (such as the e-Fuse technology) and specific programming operations.

When subscribing to the encrypted content provisioning service (e.g. a pay-TV service), the user is provided by the service provider (e.g. a TV broadcaster) with a master electronic access device 22 and one or more slave electronic access devices 3.

Each electronic access device is provided with a specific identification code (as is the case with traditional smart cards, e.g. pay-TV smart cards); the service provider stores the codes of the master and slave electronic access devices provided to the subscriber in a subscription database (as again is the case with common conditional access systems, e.g. pay-TV systems).

At the first access to the multiple access system 1, the user inserts the master electronic access device 22 into any terminal apparatus 4 in the multiple access environment 2 (e.g. a STB or TV set) and in this way access to encrypted content services (e.g. a TV broadcast program) is granted to that terminal apparatus 4.

When the user needs to access the encrypted content services (e.g. a same or different TV broadcast program) at another terminal apparatus 4 (e.g. a STB, TV set, etc.) located in a different position (e.g. another room) of the multiple access environment 2, the user inserts for the first time a slave electronic access device 3 in that terminal apparatus 4.

The slave electronic access device 3 is then configured to scan the area for the master electronic access device 22 to which it is associated (e.g. activating a wireless detection using a short-range wireless communication), and to initiate a pairing procedure that couples the same slave electronic access device 3 to the Master. Following the pairing procedure, the slave electronic access device 3 becomes part of the local network established and managed by the master electronic access device 22.

This procedure can obviously be performed for any additional slave electronic access device 3 assigned to the user for use with the master electronic access device 22 in the multiple access environment 2.

In this way, the access control subsystem 10, in this case including the master electronic access device 22, establishes its own confined network of a given number N of slave electronic access devices 3, and communicates to each of them in a secure manner the control information CS; in particular, the master electronic access device 22 communicates suitable enabling codes that in the end turn the enabling stages 8, embedded within each slave electronic access device 3, to a state that activates the (third party) crypto engine implemented by the secure processing stage 6 thereof.

It is underlined that, according to the disclosed embodiment, the pairing procedure and the associated establishing of a confined network does not require: access to cryptographic data or any other information stored in the crypto chip of the electronic access devices; any modification of the usual data exchange between the electronic access devices and the associated readers in the terminal apparatuses 4 (e.g. the CAM modules); or the set up of an "ad hoc" network for the transmission of data and signals related to the crypto chip outside the same terminal apparatuses 4.

The pairing procedure may not require any input or user intervention; alternatively, it may be envisaged that the pairing procedure is initiated upon issuing of a suitable command by the user, e.g. through a suitable pairing pushbutton associated to the access control subsystem 10.

Whenever a slave electronic access device 3 (or the terminal apparatus 4 to which it is associated) is moved outside the geographically/logically localized/delimited multiple access environment 2, associated to the network established by the master electronic access device 22, the same slave electronic access device 3 is no more able to receive the control information CS and therefore its operation is disabled (and decoding of the received encrypted content is likewise disabled).

According to a possible implementation of the disclosed multiple access system 1, pairing between the master electronic access device 22 and the various slave electronic access devices 3 is established permanently; in this case, as soon as a modification in the number/characteristics of the members of the established network is detected by the access control subsystem 10, the same access control subsystem 10 may disable the whole network and prevent access to the encrypted services. In this possible scenario, any modification to the network, subsequent to establishing thereof, may have to be authorized by the service provider.

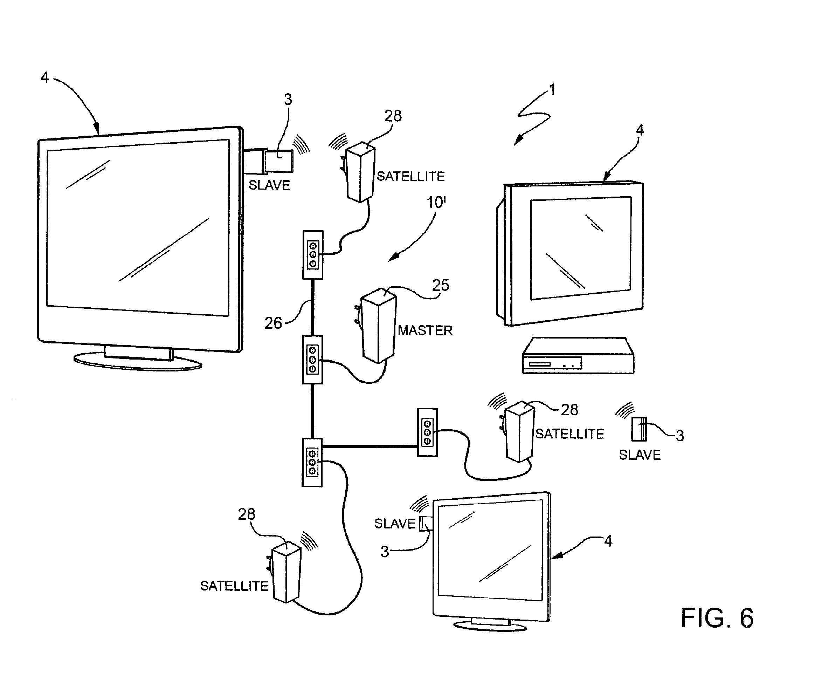

A second embodiment of the multiple access system 1 is now disclosed, with reference to Figure 6, which relates, again by way of example, to a television system.

According to this second embodiment, all the electronic access devices interfaced with respective terminal apparatuses 4 operates as Slaves with respect to the access control subsystem, here denoted with 10', of the multiple access system 1 (and are therefore denoted again as slave electronic access devices 3, e.g. again in the form of smart cards, configured as discussed in detail before); advantageously, no differences have to be implemented at the manufacturing stage in the various electronic access devices.

The access control subsystem 10' here includes a repeater device 25, which is configured to plug into the electric powerline 26 (via suitable plugs) at the subscriber's home, in order to receive the power supply and to communicate signals over the same electric powerline 26 using a standard domotic protocol (e.g. KNX, LonWorks or any other suitable proprietary protocol).

The access control subsystem 10' further includes a number of satellite devices 28, also having the capability to plug into the electric powerline 26, so as to receive signals from the repeater device 25, through the same electric powerline 26.

In particular, the repeater device 25 is provided with a computing core, which is configured to transmit control information CS, e.g. including suitable key codes, such as to activate/deactivate the enabling stage 8 of slave electronic access device 3 within the multiple access environment 2. Control information CS is received by the various satellite devices 28 through the electric powerline 26, and retransmitted to the slave electronic access devices 3 that are located in the proximity of the same satellite devices 28, conveniently by means of a proximity wireless communication protocol (such as Bluetooth, WLAN, ZigBee or Wifi). Indeed, each slave electronic access device 3 includes a suitably configured communication unit 16 (as in the first embodiment previously disclosed), so as to be able to communicate with contiguous satellite devices 28.

The repeater device 25, by means of the electric powerline 26 and the associated satellite devices 28, is thus able to create a confined network, allowing access to encrypted content via a number of terminal apparatuses 4.

It is underlined that, again, no interaction may be envisaged with the existing cryptographic engine in the slave electronic access devices 3, besides of switching it in a on/off state; i.e., the cryptographic engine can be supplied from a third party without any disclosure of the secure keys or implemented cryptographic algorithms.

At the subscription, the user is provided by the service provider with a suitably configured and programmed repeater device 25, one or more satellite devices 28 and one or more slave electronic access devices 3. The service provider stores the identification codes of the slave electronic access devices 3 in its subscriptions database (as normally happening in common conditional access systems, such as pay-per-view television systems).

At the first access, the user plugs the repeater device 25 into the electric powerline 26; moreover, the user plugs to the electric powerline 26 a satellite device 28 close (e.g. in the same room) to the terminal apparatus 4 (e.g. STB or TV set) that he/she wants to use for accessing the received encrypted content. In this way, the satellite device 28 will create a sort of wireless communication "bubble" around it, and acts as a gateway between the signals coming from the repeater device 25 through the electric powerline 26 and a slave electronic access device 3 that is inserted into a terminal apparatus 4 located near the same satellite device 28.

In particular, after a slave electronic access device 3 is inserted for the first time into a terminal apparatus 4, it may scan for the nearest satellite device 28 by means of its communication unit 16 (e.g. through a wireless detection link). The communication is then transferred by the satellite device 28 to the repeater device 25, over the electric powerline 26, and a pairing procedure is initiated to couple the slave electronic access device 3 to the repeater device 25; as an alternative solution, the pairing procedure may be initiated by the repeater device 25.

Moreover, as a further alternative, and as previously discussed, pairing may be started by a user input, e.g. issued through a suitable pushbutton on the master repeater device 25. This solution may advantageously avoid accidental and unwanted pairing, and any possible interference, with other multiple access systems 1 located in the same area.

This pairing procedure may clearly be performed for any other additional slave electronic access device 3 that needs to be used within the multiple access environment 2, and is in a relation of proximity with the same or a different satellite device 28.

The repeater device 25 thus establishes its own network of slave electronic access devices 3, to which it communicates, in a secure manner, the control information CS. If a slave electronic access device 3, or the terminal apparatus 4 containing it, is moved outside the communication range of the repeater device 25, the same slave electronic access device 3 will not be able to receive the enabling key code, and therefore its usage for accessing the received encrypted content will be disabled.

The advantages of the multiple access system and related electronic access device are clear from the foregoing description.

In any case, it is again underlined that conditional access to encrypted content is achieved at a plurality of terminal apparatuses 4, using a number of suitably enabled slave electronic access devices 3. The slave electronic access devices 3 require minimum modifications with respect to traditional access devices (e.g. pay-TV smart card access devices); likewise, the related interface devices in the terminal apparatuses 4 need not to be modified with respect to traditional solutions, thus minimizing modifications to existing hardware/software.

The slave electronic access devices 3 are not able to operate without being enabled by an access control subsystem 10, 10'; such enabling is only possible when the same slave electronic access devices 3 are located within the geographically/logically confined multiple access environment 2 established by the same access control subsystem 10, 10'. Accordingly, slave electronic access devices 3 cannot be used by unauthorized third parties, or be sold on the black market.

As previously discussed, it may be envisaged that the slave electronic access devices 3 are in an enabled condition at power-on and are able to operate for a given interval (so called timeout period); however, after this time interval, the slave electronic access devices 3 will be disabled if they do not receive any enabling signals from the access control subsystem 10, 10', again preventing any unauthorized use thereof.

Moreover, access to cryptographic data or any other proprietary information stored in the crypto chip of the slave electronic access devices 3 may not be required, nor any modification of the data exchange between the same slave electronic access devices 3 and the associated readers and interfaces in the respective terminal apparatuses 4.

Finally, it is clear that modifications and variations may be made to what has been described and illustrated herein, without thereby departing from the scope of the present invention, as defined in the annexed claims.

As previously underlined, it is possible to envisage different solutions for implementing the access control subsystem 10, 10'; likewise, the various electronic access devices 3, 22 may have different circuit configurations or different shapes or structures. Electronic access devices 3, 22 may for example include any kind of known (and suitably modified) smart card, including a secure processor embedded within a casing (e.g. credit card, pay-per-view card, or even smaller cards, such as mobile phone SIM cards).

Moreover, as previously underlined a disclosed solution may advantageously not require any modification to the crypto chip/crypto engine in the electronic access devices. Nonetheless, a further embodiment of the invention may envisage suitable modifications of the same crypto chip/crypto engine (for example made by the same manufacturer), such as to provide it with the additional functionalities of communicating with the access control subsystem 10, 10' and conditionally enabling its encoding operations, as a function of the received control information CS.

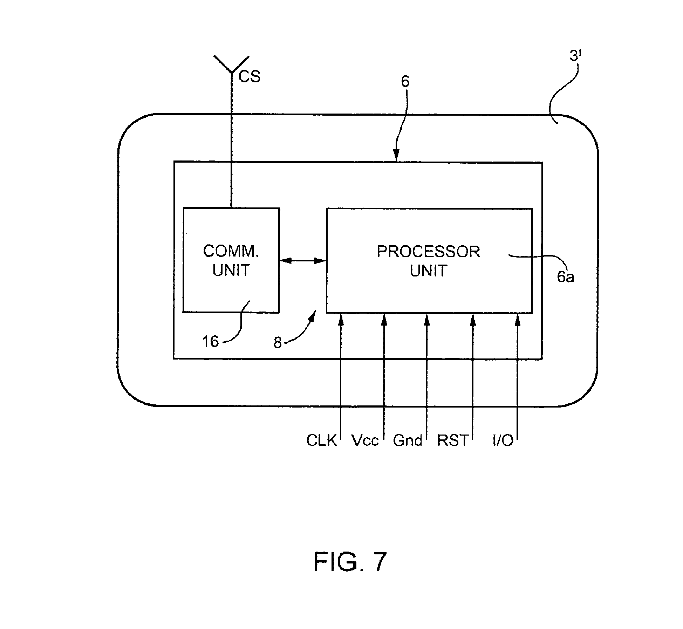

Figure 7 shows a schematic block diagram of such an alternative embodiment for a slave electronic access device, here denoted with 3', wherein only the secure processing stage 6 with the related first processor unit 6a (implementing, in a known manner, the crypto engine and cryptographic functionalities) is present, integrated in the so-called crypto chip. In this case, the secure processing stage 6 also includes, integrated in the same crypto chip, the functionalities of the enabling stage 8 of the previously disclosed embodiment (see Figures 2 and 3), and in particular a communication unit, again denoted with 16, configured to establish a wired/wireless communication link with the access control subsystem 10, 10' so as to receive the control information CS. Moreover, the same first processor unit 6a of the secure processing stage 6, based on the received control information CS, enables or disables the functionalities and operations of the crypto engine (thus integrating also the functionalities of the second processor unit 15 of the enabling stage 8); to this end, suitable modifications to the related firmware may be envisaged.

Clearly, similar considerations apply also to the master electronic access device 22, that may include only the secure processing stage 6 with a suitably modified first processor unit 6a.

Use of the disclosed system may also be advantageously envisaged in a plurality of further applications, different from the disclosed television environment. In general, the system finds advantageous application any time the need arises to selectively enable multiple electronic access devices (e.g. of the smart card type) to allow multiple access to a service, each electronic access device being provided with a secure processor configured to process secure information.

## Claims

1. A multiple access system (1) for providing conditional access to a service, the system (1) comprising a number of slave electronic access devices (3; 3') configured to interface with respective terminal apparatuses (4), each slave electronic access device (3; 3') including a secure processing stage (6) configured to process, when enabled, secure data to allow access to the service at the respective terminal apparatus (4),
**characterized by** comprising an access control subsystem (10; 10') configured to be operatively coupled to the slave electronic access devices (3; 3'); and in that each slave electronic access device (3; 3') includes an enabling stage (8) configured to: receive from the access control subsystem (10; 10') control information (CS); and selectively enable operation of the secure processing stage (6) based on the received control information (CS).

2. The system according to claim 1, wherein the service includes encrypted content designed to be received by the terminal apparatuses (4), and the secure processing stage (6) includes a first processor unit (6a) configured to allow decrypting of said encrypted content at the respective terminal apparatus (4).

3. The system according to claim 1 or 2, wherein the enabling stage (8) includes a communication unit (16) configured to communicate with the access control subsystem (10; 10') over a wireless communication link, so as to receive the control information (CS).

4. The system according to claim 3, wherein the access control subsystem (10; 10') is configured to define a confined multiple access environment (2) where the wireless communication link is established, whereby the control information (CS) is designed to be received by the enabling stage (8) of slave electronic access devices (3; 3'), provided the slave electronic access devices (3; 3') are within the confined multiple access environment (2).

5. The system according to claim 4, wherein the multiple access environment (2) is geographically and/or logically confined; and the access control subsystem (10; 10') is configured to perform pairing with slave electronic access devices (3; 3') within the confined multiple access environment (2), so as to establish a confined network of the slave electronic access devices (3; 3').

6. The system according to any of the preceding claims, wherein the secure processing stage (6) includes a first processor unit (6a) configured to process the secure data; and wherein the enabling stage (8), being external to and distinct from the secure processing stage (6), includes a second processor unit (15) configured to selectively enable operation of the first processor unit (6a) based on the received control information (CS).

7. The system according to claim 6, wherein the second processor unit (15) in the enabling stage (8) is configured to selectively allow supplying to the secure processing stage (6) of power supply signals (Vcc, Gnd), thereby selectively enabling operation of the first processor unit (6a) in the secure processing stage (6).

8. The system according to claim 7, wherein the enabling stage (8) includes a number of controlled switching elements (20), arranged along the electrical path of the power supply signals (Vcc, Gnd) to the secure processing stage (6); and the second processor unit (15) is configured to provide an enabling signal (EN) to the controlled switching elements (20) so as to selectively allow supplying of the power supply signals (Vcc, Gnd) to the secure processing stage (6).

9. The system according to claim 7 or 8, wherein the secure processing stage (6) and the enabling stage (8) are made in respective different and distinct bodies of semiconductor material.

10. The system according to any of the preceding claims, wherein the access control subsystem (10) includes a master electronic access device (22) configured to interface with a respective further terminal apparatus (4) and being provided with: a secure processing stage (6) configured to process secure data to allow access to the service at the respective further terminal apparatus (4); and a processing stage (8) configured to provide slave electronic access devices (3; 3') with the control information (CS).

11. The system according to any of claims 1-9, wherein the access control subsystem (10') includes: a repeater device (25) configured to generate the control information (CS); and a number of satellite devices (28) configured to couple with the repeater device (25) so as to receive the control information (CS), and to retransmit the control information (CS) to respective slave electronic access devices (3; 3').

12. The system according to claim 11, wherein the repeater device (25) and the satellite devices (28) are plugged into an electric powerline (26) and communicate over the electric powerline (26) by means of a communication protocol; and the satellite devices (28) are configured to communicate with the respective slave electronic access devices (3; 3') over a wireless communication link.

13. The system according to any of the preceding claims, wherein the service includes encrypted television content, and the slave electronic access devices (3; 3'), of the smart-card type, are configured to interface with a conditional access module of the respective terminal apparatuses (4), and to allow, when enabled, decryption of the encrypted television content and reproduction thereof by the respective terminal apparatuses (4).

14. A slave electronic access device (3; 3') of the multiple access system (1) according to any of the preceding claims.

15. A method for providing multiple conditional access to a service, comprising the step of:
- providing a number of slave electronic access devices (3; 3') configured to interface with respective terminal apparatuses (4), each slave electronic access device (3; 3') including a secure processing stage (6) configured to process, when enabled, secure data to allow access to the service at the respective terminal apparatus (4),
**characterized by** comprising the step of:
- providing control information (CS) to the slave electronic access devices (3; 3') such as to selectively enable operation of the respective secure processing stage (6).
